# EUROPEAN PATENT SPECIFICATION

(11) **EP 0 894 702 B1**
(45) Date of publication and mention of the grant of the patent: **21.06.2006**
(21) Application number: 98306045.0
(22) Date of filing: 29.07.1998
(51) Int. Cl.: B62K 23/06, B62L 3/02

(54) **Cable Control**
Kabelsteuerung
Commande par câble

(30) Priority: 30.07.1997 US 902987
(43) Date of publication of application: 03.02.1999
(73) Proprietor: Bolick, William, Pleasant Grove, Utah 84062 (US)
(72) Inventor: Bolick, William, Pleasant Grove, Utah 84062 (US)
(74) Representative: Moir, Michael Christopher

(56) References cited:
- EP-A- 0 788 968
- WO-A-95/17225
- WO-A-97/27405
- GB-A- 966 666
- US-A- 5 564 531

## Description

### BACKGROUND OF THE INVENTION

### FIELD OF THE INVENTION

This invention relates to a control for transversely moving cables as defined in the preamble of claim 1, especially those cables which operate such devices as the brakes on a bicycle.

Such a control is shown in US-A-4 026 390.

### DESCRIPTION OF THE RELATED ART

There are many patented systems for controlling a cable to operate devices on a bicycle.

A significant number of these patents apply to devices which simply pull the cable from one end to exert a pulling force to control a device connected to the other end of the cable. Examples of this type of control are found in United States patent numbers 2,560,154, 4,005,613; and 5,584,210.

Also, a substantial number of patents cover devices which utilize a second cable to pull at an intermediate point on a first cable to create pulling forces on both ends of the first cable To this category belong United States patent numbers 4,026,390 and 4,143,745; the embodiment represented by Figure 8 in United States patent number 4,653,613; and United States patent numbers 5,564,531 and 5,582,272. None of these patents, however, employ devices to maintain the first cable (at points other than the area where the second cable acts and the ends of such first cable) in substantially the original position of such first cable.

United States patent number 4,245,522 simply has a first lever connected by a first cable to a second lever which is connected to the cable which leads to the device to be operated. Moving either lever will then pull on a first end of the cable leading to the device to be operated by the consequent pull by the second end of such cable.

The control invention of United States patent number has a lever at each upper end of a Y-shaped cable so that using either lever to pull its assc c ated segment of the cable will create a pull at the bottom of the cable to operate a device.

A sheath designated an "outer cable" covers an "inne cable" in the invention of United States Patent number 4,901,595. At an intermediate point the sheath is divided perpendicularly to its length. The divided segment nearer the device to be controlled is held in place while the other segment is rotated away from the segment nearer the device, thereby pulling on the inner cable and creating a pull on the end of the cable which operates a device.

Finally, the invention of United States patent no. 5,540,304 utilizes a first cable attached by a first pulley to a lever in order to move such lever and thereby to create a mechanical advantage by moving a second pulley that is attached to the lever at a position farther from the pivot point than is the first pulley. This second pulley then pulls on a second cable at an intermediate point. The segments of the second cable must, however, be parallel to one another as they depart from the second pulley.

### SUMMARY OF THE INVENTION

In one aspect of the invention there is provided a cable control as defined in claim 1. Preferred features of the control are defined in the relevant dependent claims.

In another aspect of the invention there is provided a process as defined in claim 12.

The Transversely Moving Cable Control, as its name implies, creates a pull on one or both ends of a cable by exerting a force transverse to the path of the cable while maintaining the cable (at points other than the area where the second cable acts and the ends of the cable) in substantially the original position of the cable.

Such transverse movement, preferably, causes at least one end of the cable to be drawn longitudinally closer to the Transversely Moving Cable Control, just as in the case of the control systems of the prior art. Also preferably, allowing the cable to move transversely closer to its original path permits such end of the cable to move farther from the Transversely Moving Cable Control since the cable-when the lever has been moved from its original (rest) position--traditionally has some force acting longitudinally along the cible in the direction opposite to the movement caused by the transverse movement of the cable away from its original path. Also preferably, the resultant effect is the same as that achieved with a traditional control system.

Since the activating force for a device is not created by pulling one end of the cable, the Transversely Moving Cable Control can be positioned either at an end of the cable or at an intermediate position along the cable.

Moreover, no outer cable or sheath is necessary; and the segments of the cable do not have to be parallel to one another as such segments depart the Transversely Moving Cable Control.

And the mechanical advantage of the Transversely Moving Cable Control can be made adjustable.

### BRIEF DESCRIPTION OF THE DRAWINGS

Figure 1 illustrates an embodiment of the Transversely Moving Cable Control which differs from the preferred embodiment only in the fact that the pivot for the pulley that transmits the transverse force to the cable is not adjustable
Figure 2 shows the preferred embodiment for the Transversely Moving Cable Control.
Figure 3 depicts an alternate embodiment of the Transversely Moving Cable Control.
Figure 4 portrays the embodiment of Figure 1 when at first end of the cable has been anchored just beyond the exit aperture of the lever.

### DESCRIPTION OF THE PREFERRED EMBODIMENT

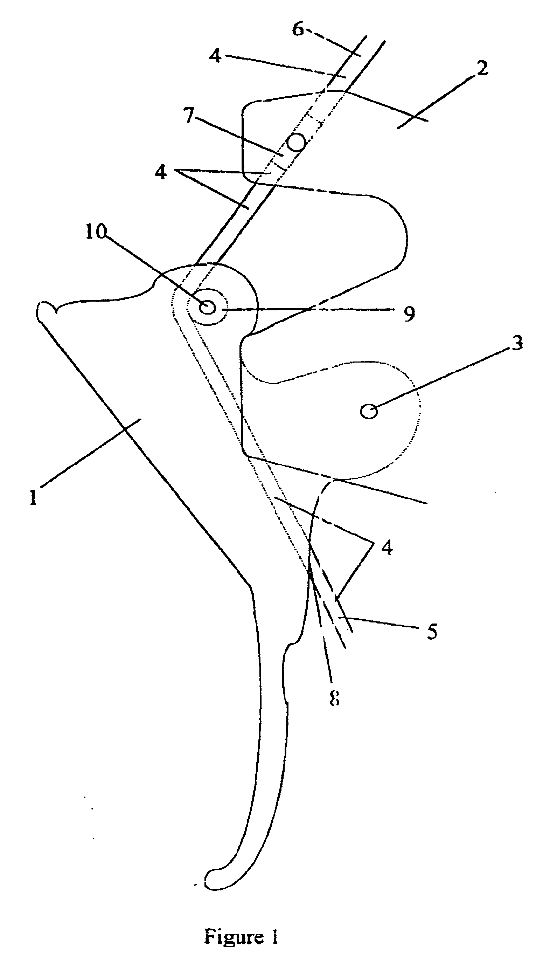

As illustrated in Figure 1, the Transversely Moving: Cable Control has a lever **1** rotatably attached to a hollow base plate **2** with a pivot **3.**

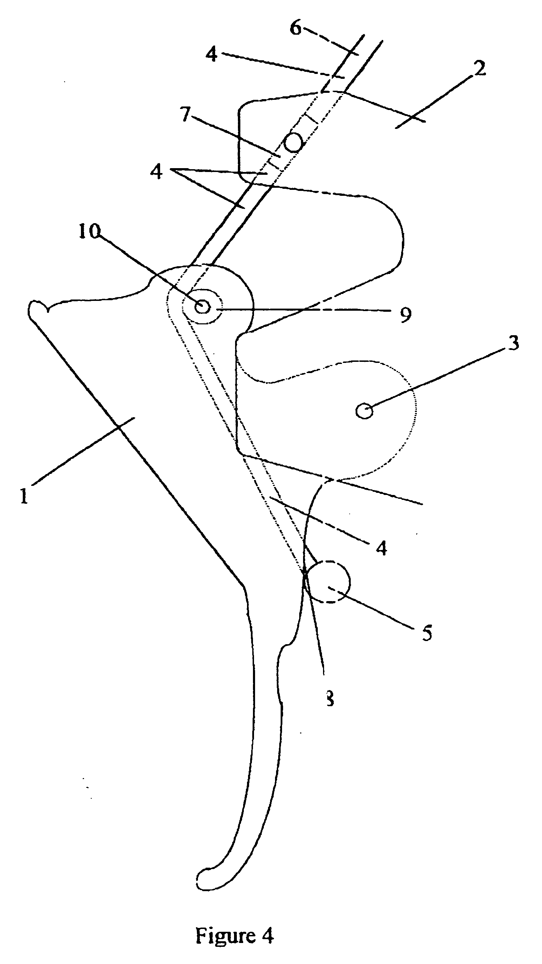

When the lever **1** has been rotated into the base plate **2** to the maximum extent possible, the cable **4** follows its original path. As the lever **1** is rotated outward from the base plate **2,** the cable **4,** between a cable guide **7** and an exit **8** from the lever **1,** is moved substantially transversely to the original path of the cable **4,** preferably by a pulley **9** attached to the lever **1** across which pulley **9** the cable **4** runs, although a simple protection would suffice for this purpose, while the cable guide **7** and the exit maintain the segments which lie outside the cable guide **7** and the exit **8** in substantially the original position of the cable. If a first end **5** of the cable **4** is anchored, such outward rotation of the lever **1** draws a second end **6** of the cable **4** longitudinally closer to the Transversely Moving Cable Control. Even, however, if the first end **5** of the cable **4** is not anchored, greater friction is encountered by the cable **4** within the lever **1** than within the cable guide **7** that is rotatably (ie pivotally) attached to the base plate **2** so that generally only the second end **6** of the cable **4**, and not the first end **5**, is drawn closer to the Transversely Moving Cable Control. (As a practical matter, though, the first end **5** of the cable **4** is always anchored, either at the exist **8** for the cable **4** from the lever **1** or at some point farther from the exit **8** when used with a bicycle. And, in fact, the exit **8** could be eliminated and methods that are well known in the art could be used to adapt the lever for attachment of the first end **5** of the cable **4**, such as simply enlarging the cable **4** just beyond the exit **8** outside the lever **1**, as illustrated in Figure 4.)

Similarly, as the lever **1** is allowed to rotate into the base plate **2**, the cable **4** is moved transversely closer to the original path of the cable **4** so that the second end **6** of the cable **4** is allowed to move longitudinally farther from the Transversely Moving Cable Control.

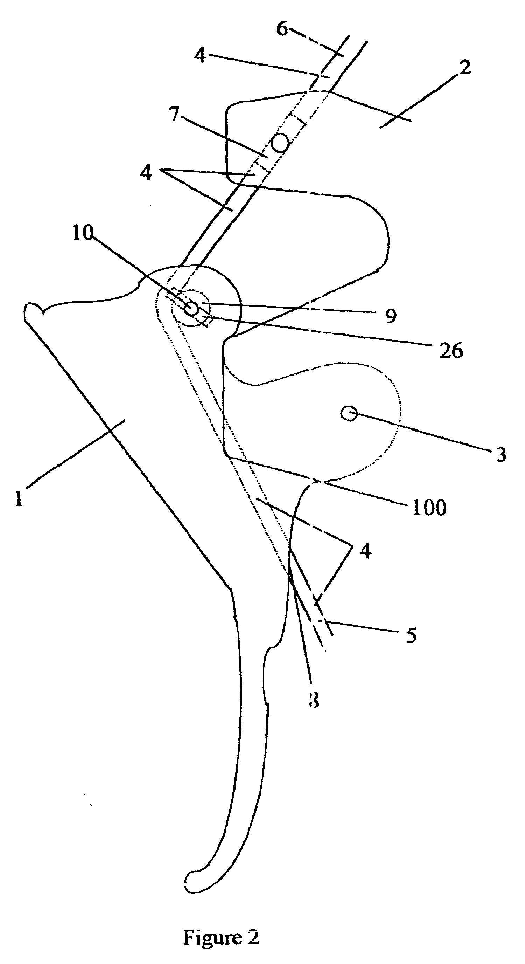

The distance which the cable **4** is moved-and, consequently, the mechanical advantage of the Transversely Moving Cable Control-can be increased either by having the pulley **9** removably attached to the lever **1** and replacing the original pulley **9** with a pulley **9** having a greater diameter than the original pulley **9** or by moving the pivot **10** of the pulley **9** farther from the pivot **3** within the channel **26**, which in the preferre embodiment of the Transversely Moving Cable Control exists as portrayed in Figure 2, within the lever **1**, so that when the lever **1** is rotated outward from the base plate **2,** the pulley **9** will be farther from the original path of the cable **4.** (The pivot 10 can be released, moved within the channel **26**, and releasably fastened at another location within the channel **26** by using techniques which are well known in the art.)

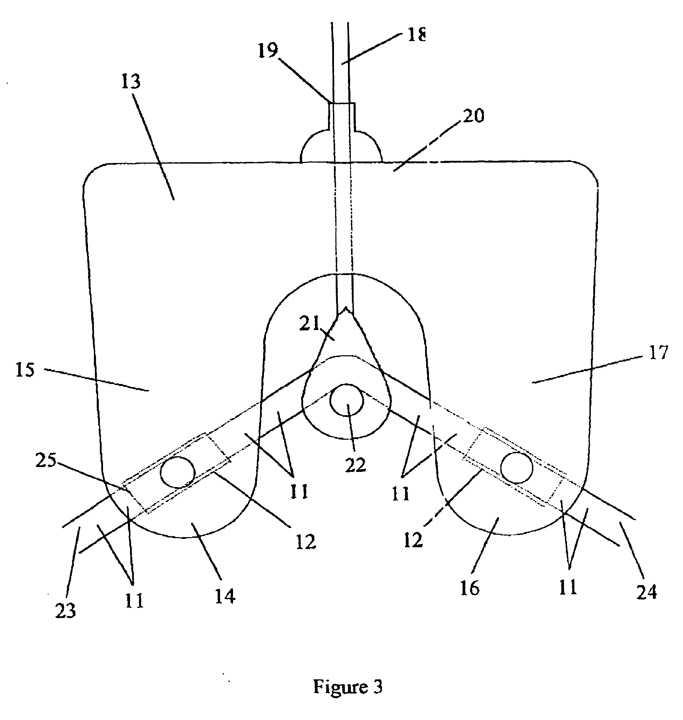

A second major embodiment of the Transversely Moving Cable Control is depicted in Figure 3.

The cable **11** runs through two cable guides **12.** The cable guides **12** are pivotally mounted in a substantially U-shaped housing 13. One cable guide **12** is mounted,
pivotally, near a first end **14** of a first leg 15 of the U-shaped housing **13.** The other cable guide **12** is mounted, pivotally, near a first exit **16** of a second leg **17** of the U-shaped housing **13.** The cable guides **12** maintain the portion of the cable **11** which lies outside the housing **13** in substantially the original position of the cable **11.**

A secondary cable **18** passes through an aperture **19** beginning in the second end **20** of the U-shaped housing **13** and extends into the space between first leg **15** and second leg **17** of the U-shaped housing **13** before being attached to a block **21.** The cable **11** passes through the block **21** between the point of attachment of the secondary cable **18** and a pulley **22.** (Although pulleys are preferable since they reduce friction, any time a pulley is mentioned such pulley could be replaced by a stationary cylinder or other cable displacement device.)

As the block **21** is drawn by the secondary cable **18** toward the aperture 19, the cable **11** is moved substantially transversely to the original path of the cable **11.** Since both cable guides **12** are identical, both the first end **23** and the secor d end **24** of the cable **11** will be pulled longitudinally closer to the U-shaped housing **13.** If only the first end **23** of the cable **11** is anchored, only the second end **24** of the cable **11** will be pulled longitudinally closer to the U-shaped housing **13.** Just as with the first embodiment of the Transversely Moving Cable Control, the first end **23** of the cable can be anchored at a first end **25** of the cable guide **12** in the first leg 15 of the U-shaped housing **13** (or, if the cable guide **12** in the first leg **15** were eliminated, simply to the first leg **15,** itself, at a point adapted for attachment of the cable **11**) or at some point farther from the first end **25** of the cable guide **12.**

Similarly, as the block **21** is allowed to move farther from the aperture **19,** the cable **11** is permitted to move transversely closer to the original path of the cable **11,** thereby permitting the unanchored end **24** (or unanchored ends **23, 24**) of the cable **11** to move longitudinally farther from the U-shaped housing **13.**

As long as the first end 23 and the second end **24** of the cable **11** are not parallel to one another, the larger the diameter of the pulley **22,** the greater will be the movement of the end **24** or both ends **23, 24** of the cable **11** and, consequently, the greater will be the mechanical advantage of the Transversely Moving Cable Control.

## Claims

1. A cable control, which comprises a means (1, 21) for transversely moving a portion of a cable (4, 11) which is within the cable control to create a pulling force upon one or both ends (5, 6) of the cable (4, 11), the cable control being **characterised by**:
a pivotable cable guide (7; 12) through which the cable passes, the cable guide (7; 12) being carried by the cable control for maintaining a segment of the cable emerging from the cable control substantially in its original position.

2. The cable control of claim 1 wherein the pivotable cable guide is elongate.

3. The cable control of claim 1 or claim 2, which comprises:
a substantially U-shaped housing (13), and comprising two said cable guides (12) respectively mounted near a first end (14, 16) of each leg (15, 17) of said housing (13) to maintain the cable segments emerging from the housing in substantially their original positions.

4. The cable control of claim 1 or 2, which comprises:
a substantially U-shaped housing (13) having a first leg (15) adapted for attachment of the cable (11) and wherein the cable guide (12) is mounted near a first end (16) of a second leg (17) of said housing (13) to maintain the cable segment emerging from the housing (13) in substantially its original position.

5. The cable control of claim 3 or 4, wherein:
said housing contains an aperture (19) through which a secondary cable (18) passes before being attached to a block (21); and
the means (21) for transversely moving the cable (11) comprises a block (21) having a pulley (22) over which the cable (11) is adapted to pass so that when the block is drawn by the secondary cable (18) toward the aperture (19) in the housing, the cable (11) is able to be moved substantially transversely to the original path of the cable (11).

6. The cable control of claim 1 or 2, which comprises a hollow base plate (2) to which is pivotably attached said cable guide (7).

7. The cable control of claim 5 or 6, wherein the moving means (1) is adapted for attachment to the first end of the cable.

8. The cable control of claim 6 or 7, wherein the moving means (1) comprises:
a lever (1) rotatably attached to said hollow base plate (2);
a pulley (9) attached to said lever (1) across which pulley the cable (4) is adapted to run so that when the lever (1) is rotated away from said base plate (2), the pulley (9) exerts a transverse force on the portion of cable (4) within the cable control which causes the portion of cable to move in a transverse direction creating a pulling force on one or both ends of the cable.

9. The cable control of claim 8, wherein the lever (1) is adapted for said attachment to the first end (5) of the cable (4).

10. The cable control of claim 8 or 9, wherein said pulley (9) is removably attached to said lever (1).

11. The cable control of claim 8 or 9, further comprising a channel in the lever (1) within which a pivot (10) of said pulley (9) can be releasably fastened, released, moved, and releasably fastened again.

12. A process for exerting a control force at one or more ends of a cable (4), which comprises transversely moving a portion of the cable which is within a cable control according to any of the preceding claims to create a pulling force upon one or both ends (5, 6) of the cable (4); **characterised by**:
using a pivotable cable guide (7; 12) through which the cable passes, maintaining a segment of the cable emerging from the cable control substantially in its original position.

## Patentansprüche

1. Kabelsteuerung, mit einem Mittel (1, 21) zum transversalen Bewegen eines Abschnittes eines Kabels (4, 11), das innerhalb der Kabelsteuerung verläuft, um eine Zugkraft auf ein oder beide Enden (5, 6) des Kabels (4, 11) zu erzeugen, wobei die Kabelsteuerung **gekennzeichnet ist durch**:
eine schwenkbare Kabelführung (7; 12), **durch** welche das Kabel passiert, wobei die Kabelführung (7; 12) **durch** die Kabelsteuerung getragen wird, um ein Segment des Kabels, welches aus der Kabelsteuerung herausragt, im wesentlichen an seiner ursprünglichen Position zu behalten.

2. Kabelsteuerung nach Anspruch 1, bei welcher die schwenkbare Kabelführung länglich ausgebildet ist.

3. Kabelsteuerung nach Anspruch 1 oder Anspruch 2, welche enthält:
ein im wesentlichen U-förmiges Gehäuse (13), mit zwei Kabelführungen (12), welche jeweils nahe an einem ersten Ende (14, 16) eines jeden Beins (15, 17) des Gehäuses (13) angebracht sind, um die Kabelsegmente, welche aus dem Gehäuse herausragen, im wesentlichen an ihren ursprünglichen Positionen zu behalten.

4. Kabelsteuerung nach Anspruch 1 oder 2, welche enthält:
ein im wesentlichen U-förmiges Gehäuse (13), mit einem ersten Bein (15), welches zum Anbringen des Kabels (11) angepasst ist, und wobei die Kabelführung (12) nahe an einem ersten Ende (16) eines zweiten Beines (17) des Gehäuses (13) angebracht ist, um das Kabelsegment, welches aus dem Gehäuse (13) herausragt, im wesentlichen an seiner ursprünglichen Position zu behalten.

5. Kabelsteuerung nach Anspruch 3 oder 4, bei welcher:
das Gehäuse eine Öffnung (19) enthält, durch welche ein zweites Kabel (18) passiert, bevor es an einem Block (21) angebracht wird; und
das Mittel (21) zum transversalen Bewegen des Kabels (11) einen Block (21) enthält, welcher eine Rolle (22) aufweist, über welche das Kabel (11) dazu angepasst ist, derart zu passieren, dass, wenn der Block durch das zweite Kabel (18) zur Öffnung (19) im Gehäuse hingezogen wird, das Kabel (11) dazu in der Lage ist, im wesentlichen transversal zum ursprünglichen Pfad des Kabels (11) bewegt zu werden.

6. Kabelsteuerung nach Anspruch 1 oder 2, welche eine ausgesparte Basisplatte (2) enthält, an welche die Kabelführung (7) schwenkbar angebracht ist.

7. Kabelsteuerung nach Anspruch 5 oder 6, bei welcher das Bewegungsmittel (1) zum Anbringen an das erste Ende des Kabels angepasst ist.

8. Kabelsteuerung nach Anspruch 6 oder 7, bei welcher das Bewegungsmittel (1) enthält:
einen Hebel (1), welcher drehbar an der ausgesparten Basisplatte (2) angebracht ist;
eine Rolle (9), welche an dem Hebel (1) angebracht ist, wobei über die Rolle hinweg das Kabel (4) dazu angepasst ist, derart zu verlaufen, dass, wenn der Hebel (1) von der Basisplatte (2) aus weggedreht wird, die Rolle (9) eine Querkraft auf den Abschnitt des Kabels (4) innerhalb der Kabelsteuerung ausübt, welches bewirkt, dass sich der Abschnitt des Kabels in einer Querrichtung bewegt, welches eine Zugkraft an ein oder beide Enden des Kabels erzeugt.

9. Kabelsteuerung nach Anspruch 8, bei welcher der Hebel (1) zum Anbringen an das erste Ende (5) des Kabels (4) angepasst ist.

10. Kabelsteuerung nach Anspruch 8 oder 9, bei welcher die Rolle (9) entfernbar am Hebel (1) angebracht ist.

11. Kabelsteuerung nach Anspruch 8 oder 9, welche ferner einen Kanal im Hebel (1) enthält, innerhalb dessen ein Stift (10) der Rolle (9) lösbar befestigt, entnommen, bewegt und wieder lösbar befestigt werden kann.

12. Verfahren zum Ausüben einer Steuerkraft an ein oder mehrere Enden eines Kabels (4), welche ein transversales Bewegen eines Abschnittes des Kabels, welches innerhalb einer Kabelsteuerung nach einem der vorhergehenden Ansprüche ist, enthält, um eine Zugkraft auf ein oder beide Enden (5, 6) des Kabels (4) zu erzeugen, **gekennzeichnet durch**:
Verwenden einer schwenkbaren Kabelführung (7; 12), **durch** welche das Kabel passiert, wobei ein Segment des Kabels, welches aus der Kabelsteuerung herausragt, im wesentlichen an seiner ursprünglichen Position verbleibt.

## Revendications

1. Commande par câble, qui comprend un moyen (1, 21) pour déplacer transversalement une portion d'un câble (4, 11) qui est dans la commande par câble pour créer une force de traction sur une ou les deux extrémité(s) (5, 6) du câble (4, 11), la commande par câble étant **caractérisée par** :
un guide de câble (7 ; 12) pouvant pivoter à travers lequel le câble passe, le guide de câble (7 ; 12) étant supporté par la commande par câble pour maintenir un segment du câble émergeant de la commande par câble substantiellement dans sa position d'origine.

2. Commande par câble selon la revendication 1 dans laquelle le guide de câble pouvant pivoter est allongé.

3. Commande par câble selon la revendication 1 ou la revendication 2, qui comprend :
un logement (13) de forme substantiellement en U, et comprenant deux dits guides de câble (12) respectivement montés près d'une première extrémité (14, 16) de chaque patte (15,17) dudit logement (13) pour maintenir les segments de câble émergeant du logement dans substantiellement leur position d'origine.

4. **Commande par câble selon la revendication 1 ou 2, qui comprend :**
un logement (13) de forme substantiellement en U ayant une première patte (15) appropriée pour la fixation du câble (11) et dans lequel le guide de câble (12) est monté près d'une première extrémité (16) d'une deuxième patte (17) dudit logement (13) pour maintenir le segment de câble émergeant du logement (13) dans substantiellement sa position d'origine.

5. Commande par câble selon la revendication 3 ou 4, dans laquelle:
ledit boîtier contient une ouverture (19) à travers laquelle un câble secondaire (18) passe avant d'être fixé à un bloc (21) ; et
le moyen (21) pour déplacer transversalement le câble (11) comprend un bloc (21) ayant une poulie (22) sur laquelle le câble (11) est approprié pour passer de sorte que lorsque le bloc est tiré par le câble secondaire (18) vers l'ouverture (19) dans le boîtier, le câble est capable d'être déplacé substantiellement
transversalement au chemin d'origine du câble (11).

6. Commande par câble selon la revendication 1 ou 2, qui comprend une plaque de base creuse (2) à laquelle est fixée de manière à pouvoir pivoter ledit guide de câble (7).

7. Commande par câble selon la revendication 5 ou 6, dans laquelle le moyen de déplacement (1) est approprié à la fixation de la première extrémité du câble.

8. Commande par câble selon la revendication 6 ou 7, dans laquelle le moyen de déplacement (1) comprend :
un levier (1) fixé de manière à pouvoir pivoter sur ladite plaque de base creuse (2);
une poulie (9) fixée audit levier (1) à travers laquelle poulie le câble (4) est approprié pour passer de sorte que lorsque le levier (1) est écarté par rotation de ladite plaque de base (2), la poulie (9) exerce une force transversale sur la portion de câble (4) dans la commande par câble qui fait que la portion de câble qui se déplace dans une direction transversale crée une force de traction sur une ou les deux extrémité(s) du câble.

9. Commande par câble selon la revendication 8, dans laquelle le levier (1) est approprié pour ladite fixation à la première extrémité (5) du câble (4).

10. Commande par câble selon la revendication 8 ou 9, dans laquelle ladite poulie (9) est fixée de manière amovible audit levier (1).

11. Commande par câble selon la revendication 8 ou 9, comprenant en outre un canal dans le levier (1) dans lequel un pivot (10) de ladite poulie (9) peut être fixé de manière à pouvoir être détendu, relâché, déplacé et fixé de manière à pouvoir être détendu à nouveau.

12. Procédé pour exercer une force de commande à une ou plusieurs extrémité(s) d'un câble (4), qui comprend de déplacer transversalement une portion du câble qui est dans une commande par câble selon l'une quelconque des revendications précédentes pour créer une force de traction sur une ou les deux extrémité(s) (5, 6) du câble (4) ; **caractérisé par** :
l'utilisation d'un guide de câble (7 ; 12) pouvant pivoter à travers lequel le câble passe, en maintenant un segment du câble émergeant de la commande par câble substantiellement dans sa position d'origine.
